# EUROPÄISCHE PATENTANMELDUNG

(11) **EP 1 338 532 A2**
(43) Veröffentlichungstag der Anmeldung: **27.08.2003**
(21) Anmeldenummer: 02029075.5
(22) Anmeldetag: 30.12.2002
(51) Int. Cl.: B65G 17/44

(54) **Förderkette**

(30) Priorität: 21.02.2002 DE 20202736 U
(71) Anmelder: JOH. WINKLHOFER & SÖHNE GmbH & Co KG, D-81369 München (DE)
(72) Erfinder: Merlin, Josef Uwe, 81371 München (DE); Kerle, Alexander, 86842 Türkheim (DE); Schlaffer, Robert, 85467 Oberneuching (DE)
(74) Vertreter: Grünecker, Kinkeldey, Stockmair & Schwanhäusser Anwaltssozietät

(57) **Zusammenfassung**

Die Erfindung bezieht sich auf eine Förderkette (1), insbesondere Dosen- und Tubentransportkette, mit jeweils über ein Kettengelenk abwechselnd miteinander verbundenen Innenkettengliedern (2), die mindestens zwei Innenlaschen (5) und zwei, die Innenlaschen (5) im parallelen Abstand zueinander verbindende Hohlbolzen aufweisen, und Außenkettengliedern (3), die mindestens zwei Außenlaschen (8) und zwei, die Innenlaschen (5) in parallelem Abstand zueinander verbindende Gelenkbolzen (9) aufweisen, sowie mit mindestens einem seitlich überstehenden, federnd ausgestalteten Transportstab (4), wobei sich jeweils ein Gelenkbolzen (9) zum Bilden eines Kettengelenks durch einen Hohlbolzen erstreckt und der Transportstab (4) an einer Außenlasche (8) zwischen den Gelenkbolzen befestigt ist.

## Beschreibung

Die Erfindung bezieht sich auf eine Förderkette, insbesondere Dosen- und Tubentransportkette, mit jeweils über ein Kettengelenk abwechselnd miteinander verbundenen Innenkettengliedern, die mindestens zwei Innenlaschen und zwei, die Innenlaschen im parallelen Abstand zueinander verbindende Hohlbolzen aufweisen, und Außenkettengliedern, die mindestens zwei Außenlaschen und zwei, die Innenlaschen in parallelem Abstand zueinander verbindende Gelenkbolzen aufweisen, sowie mit mindestens einem seitlich überstehenden, federnd ausgestalteten Transportstab, wobei sich jeweils ein Gelenkbolzen zum Bilden eines Kettengelenks durch einen Hohlbolzen erstreckt.

Aus der Patentschrift US 5232083 ist eine Transportvorrichtung mit einer solchen endlos umlaufenden Förderkette bekannt. Die Förderkette ist als Gelenkkette ausgeführt und in vorbestimmten Abständen mit Transportstäben versehen, auf die Behälter, insbesondere Dosenrohlinge aus Blech, gesteckt werden. Die Transportstäbe sind an einem Ende mit einem federnden Kopf versehen, der derartige Behälter gegen Beschädigungen schützt, während das andere Ende als Schaft ausgeführt ist, um den Transportstab an der Förderkette zu befestigen. Der Schaft ist gegenüber dem Rest des Transportstabs verjüngt, wodurch sich zwischen Schaft und dem Rest des Transportstabs eine Anschlagfläche zur Montage ergibt. Am anderen Ende weist der Schaft eine Nut zur Arretierung auf. Der Schaft des Transportstabs wird bis zur Anschlagfläche in den Hohlbolzen der Förderkette gesteckt und auf der anderen Seite der Kette mit einem in die Nut eingreifenden Sicherungsring arretiert. Durch diese Konstruktion wird durch den Schaft des Transportstabs ein Gelenkbolzen der Gelenkkette ersetzt.

Bei einer aus der DE 7130659 U1 bekannten Förderkette bildet ein eingesteckter Schaft des Transportstabs einen Gelenkbolzen einer Gelenkkette. In das überstehende Einsteckende des Schaftes wird zur Ausziehsicherung ein Splint eingesetzt. Der Transportstab kann abgesehen vom Kopf zum Schutz der Behälter einteilig oder zweiteilig aus einem Fuß mit befestigtem Transportstab gestaltet sein.

Die DE 9317226 U1 beschreibt eine Fördervorrichtung mit einer Hohlbolzen-Gelenkkette. Hier sind entsprechend konstruierte Transportstäbe in als Hohlbolzen ausgeführten Gelenkbolzen befestigt. Zur Arretierung sind diese Transportstäbe mit Rastelementen ausgestaltet, die in eine entsprechende Gegenrast am Hohlbolzen eingreifen. Die Ausführung der Transportstäbe mit Rastelementen ermöglicht in Verbindung mit einer Hohlbolzen-Gelenkkette ein einfaches Auswechseln der Transportstäbe.

Weitere Transportvorrichtungen, in denen der Transportstab in den als Hohlbolzen ausgeführten Gelenkbolzen in der Förderkette verankert sind, sind in der DE 7610413 U1 und der DE 8802417 U1 beschrieben.

Bei einer Gelenkkette gemäß DE 7737243 U1 ist der Adapterfuß eines Transportstabadapters in einen als Hohlbolzen ausgeführten Gelenkbolzen eingesteckt. Das überstehende Einsteckende des Adapterfußes ist durch eine mit Krallen bewehrte Sicherungskappe gegen ein Herausziehen gesichert. Wiederum weist der Transportstab einen Kopf zum Schutz der Behälter auf und ist mit seinem anderen Ende im Adapter verankert.

Auch die DE 2234115 A1 beschreibt einen Transportstab mit einem Adapterfuß, der in dem Hohlbolzen einer Förderkette befestigt ist.

Die US 4927002 A zeigt eine Förderkette mit an einer Kettenseite angebrachten Transportstäben. Auf dem einen Ende des Transportstabs ist wiederum ein Kopf zum Schutz der Behälter befestigt, während das andere Ende als kurzer Hohlwellenstummel ausgebildet ist. Dieser Hohlwellenstummel wird auf das verlängerte Ende der die Kettenglieder miteinander verbindenden Gelenkbolzen aufgeschoben. Ein Abziehschutz für den Transportstab wird über einen Presssitz erreicht. Der Transportstab stützt sich über ein Verbindungsglied an einem weiteren verlängerten Gelenkbolzen ab.

Bei der DE 2814356 wird der Transportstab mit einer Kupplungshülse auf das verlängerte Ende eines Gelenkbolzens aufgesteckt.

Auch die DE 8232383 U1beschreibt eine Förderkette, an der ein Adapter mit einer Gegenplatte an der Kette befestigt ist. Die Gegenplatte ist mit zwei Stiften versehen, wobei wenigstens ein Stift auf der anderen Seite der Kette hinausragt und dort in den Adapterkopf eingreift. Die Stifte der Gegenplatte werden durch die als Hohlbolzen ausgeführten Gelenkbolzen der Förderkette geführt. Sowohl der Transportstab, als auch der über die Kette hinausragende Stift der Gegenplatte sind in dem Adapterkopf eingepresst.

Alle oben aufgeführten Konzepte für Förderketten zum Transport von Behältern bauen entweder auf typischen Gelenkketten auf, die aber in besonderen Montagevorrichtungen montiert werden müssen, oder sie benötigen spezielle Sonderformen, z.B. Hohlbolzen-Gelenkketten oder Ketten mit verlängertem Gelenkbolzen. Die Transportmechanismen für die Behälter bestehen typischerweise aus mehreren Teilen, die unterschiedliche Funktionen erfüllen. Neben einem häufig zum Schutz der Behälter besonders ausgestalteten Kopf, haben alle unterschiedlichen Konzepte einen Transportstab zum Aufstecken der Behälter. Der Transportstab ist über einen Adapter mit dem Gelenkbolzen oder direkt in dem als Hohlbolzen ausgeführten Gelenkbolzen verankert, bzw. ersetzt den Gelenkbolzen in der Förderkette. Zum Schutz vor einem unbeabsichtigten Lösen ist der Transportstab oder der Adapter durch ein Befestigungselement sicher mit dem Gelenkbolzen verbunden. Austauschbarkeit ist bei allen Konzepten ein wichtiges Thema. Eine Anordnung im Gelenkbereich eignet sich für diese gewünschte Montage- und Demontagefunktion besonders gut. Daher werden diese Konzepte seit vielen Jahren mit unterschiedlichen Lösungsvarianten verfolgt, immer weiter optimiert und in vielen Einzelheiten verbessert, wie die große Anzahl der aufgefundenen Druckschriften deutlich unterstreicht. Die Menge an Druckschriften weist außerdem auf eine gespannte Marktsituation und ein durch die Weiterentwicklung und Optimierung von bestehenden Produkten und Produktlinien gekennzeichnetes, stark bearbeitetes Fachgebiet hin.

Der vorliegenden Erfindung liegt die Aufgabe zugrunde, eine Förderkette zu entwickeln, die eine Reduzierung der Herstellkosten ermöglicht.

Diese Aufgabe wird bei einer gattungsgemäßen Förderkette dadurch gelöst, dass der Transportstab an einerAußenlasche zwischen den Gelenkbolzen befestigt ist.

Zwar ist aus der Offenlegungsschrift WO 9957017 A1 eine Befülleinrichtung für Folienbeutel bekannt, die zwei Gelenkketten mit kurzen, zwischen den Gelenkbolzen angeordneten kurzen Einsteckdornen verwendet. Jedoch werden die kurzen, angespitzten Einsteckdorne zum Öffnen und Auseinanderhalten der Folienbeutel mittels zweier unabhängiger Kettenstränge verwendet. Die Folienränder werden durch einen Keil voneinander getrennt und mit einer Walze auf die Einsteckdorne gepresst. Die Druckschrift macht weder eine Aussage darüber, dass die Einsteckdorne auf den Außenlaschen befestigt sind, noch wie die Befestigung generell ausgeführt ist. Auch lässt sich die Durchstechfunktion der Dorne nur durch ein sehr starres System verwirklichen.

Eine Möglichkeit Fortsätze oder Vorsprünge zur Förderung von Aushub oder Getreide mittig an einem Kettenglied zu platzieren ist aus der US 4518077 bekannt. Jeweils zwei Mitnehmereinheiten aus Kunststoff werden von zwei Seiten auf ein Außenkettenglied einer Hohlbolzen-Gelenkkette aufgesetzt, wobei sich beide Mitnehmereinheiten über zwei Stifte in den als Hohlbolzen ausgebildeten Gelenkbolzen am Außenkettenglied abstützen.

Bei der erfindungsgemäßen Förderkette wird, im Gegensatz zum Stand der Technik, ein seitlich überstehender, federnd ausgestalteter Transportstab direkt an der Außenlasche des Außenkettengliedes zwischen den Gelenkbolzen befestigt. Statt der sonst vielfach verwendeten Hohlbolzen-Gelenkketten kommt bei dieser Förderkettenkonstruktion eine einfache Standardgelenkkette zum Einsatz, bei der seitlich an der Außenlasche der federnde Transportstab befestigt wird. Die Befestigung des Transportstabs hat daher keine negativen Auswirkungen bzw. Einflüsse auf die Gelenkkonstruktion der Kette, was im Stand der Technik vielfach zu einem höheren Verschleiß geführt hat. An den Transportstäben auftretende Kräfte werden über die Befestigung an der Außenlasche des Außenkettenglieds im Abstand zu den Kettengelenken eingeleitet. Des Weiteren werden insgesamt weniger Sonderteile zur Herstellung der Förderkette benötigt. In typischen Anwendungen sind die Transportstäbe und die Kettengelenke horizontal angeordnet, um die transportierenden Gegenstände auch vertikal fördern zu können. Dabei können auch federnd ausgestaltete Transportstäbe zueinander fluchtend auf beiden Seiten eines Kettengliedes der Förderkette zum Transport von Behältern an den Außenlaschen befestigt werden. Durch eine erfindungsgemäße Konstruktion wird für die Befestigung des federnden Transportstabs an der Förderkette, insbesondere für den Transport von Hohlkörpern, ein gänzlich neuer Weg eingeschlagen, der die bisherigen aufwändigeren verschleißanfälligeren Lösungen durch eine einfache Technik ersetzt.

Eine günstige Ausführungsform sieht vor, dass eine dem Innenkettenglied abgewandte Außenfläche der mit dem Transportstab versehenen Außenlasche eine Ebene aufspannt und sich in dieser Ebene eine Abstandsgerade zwischen den Achsen der Gelenkbolzen des Außenkettenglieds erstreckt, wobei die Abstandsgerade eine Längsachse des Transportstabs schneidet. Diese (gedachte) Abstandsgerade beschreibt eine Gerade zwischen den Achsen der zwei Gelenkbolzen mit dem kürzestmöglichen Abstand. Die Befestigung des Transportstabs auf der Abstandsgeraden ermöglicht eine sichere Krafteinleitung und Aufteilung der Kraft auf die zwei Gelenkbolzen. Auch wird ein ausreichender Abstand zu den Außenrändern der Außenlasche eingehalten, was insbesondere bei taillierten Außenlaschen für die sichere Krafteinleitung positiv ist.

Bei einer Umlenkung der Förderkette beschreibt der Schnittpunkt derAbstandsgeraden und der Längsachse des Transportstabs eine Umlenkung mit geringerem Radius als die Schnittpunkte der Achsen der Gelenkbolzen mit der gedachten Abstandsgeraden.

Eine Variante der Förderkette sieht vor, dass eine dem Innenkettenglied abgewandte Außenfläche der mit dem Transportstab versehenen Außenlasche eine Ebene aufspannt und sich in dieser Ebene eine (gedachte) Abstandsgerade zwischen den Achsen der zwei Gelenkbolzen des Außenkettenglieds erstreckt, wobei ein Abstand zwischen einem Schnittpunkt einer Längsachse des Transportstabs mit der aufgespannten Ebene und der Abstandsgeraden maximal dem Durchmesser des Gelenkbolzens entspricht. Diese Positionierung des Transportstabs ermöglicht verschiedene Variationen der Befestigung des Transportstabes an der Außenlasche, wodurch sich unterschiedliche Ebenen für den Transport der Behälter erschließen lassen.

Um eine gleichmäßige Aufteilung der durch den Transportstab in die Außenlache eingeleitenden Kräfte auf beide Gelenkbolzen zu realisieren, kann der Transportstab von beiden Gelenkbolzen eines Außenkettenglieds gleich weit beabstandet sein. Dadurch ist auch eine Umkehrung der Laufrichtung der Förderkette ohne Probleme möglich.

Eine vorteilhafte Ausgestaltung sieht vor, dass eine dem Innenkettenglied abgewandte Außenfläche der mit dem Transportstab versehenen Außenlasche eine Ebene aufspannt und sich in dieser Ebene eine Abstandgerade zwischen den Achsen der zwei Gelenkbolzen des Außenkettenglieds erstreckt, wobei sich die Außenlaschen in der aufgespannten Ebene symmetrisch zu beiden Seiten der (gedachten) Abstandsgeraden erstrecken. Durch diese Ausgestaltung lassen sich einfache Außenlaschen einsetzen, die durch ihre variablen Möglichkeiten der Anordnung die Montage vereinfachen können. Die bei Rollenketten eingesetzten Standardlaschen erfüllen diese Anforderungen, wobei für die erfindungsgemäße Förderkette gerade oder konkav ausgebildete Laschenformen zu bevorzugen sind.

Günstigerweise können sämtliche Außenlaschen eine gleiche Größe und eine gleiche Außenkontur in einer durch die dem Kettenglied abgewandten Außenfläche derAußenlasche aufgespannten Ebene aufweisen. Dadurch wird die Konstruktion der Förderkette weiter vereinfacht, da weniger Einzelteile notwendig sind. Der Transportstab kann auf einer normalen Außenlasche befestigt werden.

Ein Vorteil ist weiter, dass der Transportstab durch eine Schweißverbindung befestigt ist. Durch die Schweißverbindung wird der Transportstab sicher und unlösbar auf der Außenlasche befestigt.

Bevorzugt kann die Schweißverbindung eine Punktverschweißung sein. Die Punktverschweißung ermöglicht eine einfache Verbindung, ohne zusätzliches Material aufzutragen.

Eine weitere Ausgestaltung sieht vor, dass der Transportstab auf eine Außenfläche der Außenlasche aufgesetzt ist. Das stumpfe Aufsetzen des Transportstabs auf die Außenfläche der Außenlasche ermöglicht eine schnelle Schweißverbindung, ohne dass eine Vorbearbeitung des Transportstabs oder der Außenlasche notwendig ist.

Eine Variante der Förderkette sieht vor, dass ein Ende des Transportstabs in einer Öffnung der Außenlasche angeordnet ist. Dadurch wird eine exakte vorbestimmte Positionierung des Transportstabs auf derAußenlasche erreicht.

Eine günstige Ausführung sieht vor, dass der Transportstab in der Öffnung der Außenlasche eingepresst ist. Durch das Einpressen des Transportstabs in der Öffnung der Außenlasche wird eine formschlüssige Verbindung von Transportstab und Außenlasche erreicht. Durch die Vermeidung der bei einer Schweißverbindung lasche erreicht. Durch die Vermeidung der bei einer Schweißverbindung auftretenden Wärmebelastung können wärmebedingte geometrische Veränderungen vermindert werden.

Eine größere Verbindungsfläche zwischen Transportstab und der Öffnung der Außenlasche kann dadurch erreicht werden, dass die Außenlasche zumindestens auf einer Seite einen, die Öffnung umgebenden, umlaufenden Bund aufweist. Dadurch kann neben der Befestigung auch die Positionierung auf derAußenlasche und die seitliche Orientierung des Transportstabs verbessert werden.

Vorteilhafterweise kann die Öffnung und der Bund durch Umformen der Außenlasche, insbesondere durch einen Stanz-Biegevorgang, ausgebildet sein. Das Umformen ist eine preiswerte und schnelle Herstellungsmöglichkeit für die Öffnung und den umlaufenden Bund. Für den Herstellungsvorgang ist nur ein Bauteil notwendig. Je nach Ausbildung der Förderkette kann als Bauteil eine Standardlasche eingesetzt werden.

Eine zweckmäßige Ausführungsform sieht vor, dass der Transportstab aus Federstahldraht hergestellt ist. Durch die Federwirkung des Transportstabs können die Schäden an der Förderkette im Betrieb, insbesondere bei Betriebsstörungen, reduziert werden.

Eine Variante sieht vor, dass der Federstahldraht aus einem hochlegierten Chrom-Nickel-Stahl, insbesondere einem X 12CrNi17 7, hergestellt ist. Durch diesen korrosionsbeständigen Federstahldraht eignet sich die Förderkette auch zum Betrieb in aggressiven Medien.

Bevorzugt kann ein Mittenabstand zweier Transportstäbe auf der Förderkette einem Vielfachen eines Mittenabstands der Gelenkbolzen eines Außenkettenglieds entsprechen. Diese Konstruktion ermöglicht eine variable Ausgestaltung der Förderkette. Durch die periodische Wiederholung von Transportstäben kann ein optimierter Betrieb erreicht werden. Auch ermöglicht die Positionierung der Transportstäbe entsprechend eines Vielfachen eines Mittenabstands der Gelenkbolzen Gelenkketten mit kleiner Kettenteilung als Förderkette einzusetzen.

Eine zweckmäßige Ausführungsform sieht vor, dass der Transportstab sich parallel zu den Gelenkbolzen erstreckt. Durch die parallele Erstreckung des Transportstabs und der Gelenkbolzen wird eine Führung der Förderkette auf kleinstem Raum möglich.

Zum Schutz der transportierten Behälter vor Beschädigungen kann ein freies Ende des Transportstabs abgerundet sein.
Eine weitere Ausbildung sieht vor, dass ein freies Ende des Transportstabs mit einer Endkappe versehen ist. Die Endkappe bietet auch für empfindliche Behälter einen guten Schutz vor Beschädigungen.

Im Folgenden werden Ausführungsformen der vorliegenden Erfindung anhand einer Zeichnung näher erläutert. Es zeigen:
- Fig. 1: eine Draufsicht auf eine erfindungsgemäße Förderkette,
- Fig. 2: eine Seitenansicht der Förderkette,
- Fig. 3: eine Querschnittsansicht der Förderkette entlang der Linie III-III in Fig. 2,
- Fig. 4: einen Schnitt auf eine Außenlasche mit befestigtem Transportstab der Förderkette aus Fig. 1,
- Fig. 5: eine Seitenansicht aus der Richtung des Transportstabes auf eine Außenlasche mit befestigtem Transportstab,
- Fig. 6: einen Schnitt auf eine weitere Ausführungsform der Außenlasche mit einer Öffnung und einem umlaufendem Bund, sowie einem eingepressten Transportstab, und
- Fig. 7: eine Seitenansicht aus der Richtung des Transportstabs auf die Außenlasche mit Öffnung und umlaufendem Bund sowie eingepresstem Transportstab aus Fig. 6.

Die in den Figuren dargestellte erfindungsgemäße Förderkette 1 ist als Rollenkette ausgeführt, mit Innenkettengliedern 2 und Außenkettengliedern 3 sowie einem am Außenkettenglied 3 befestigten Transportstab 4. Das Innenkettenglied 2 besteht jeweils aus zwei parallel verlaufenden Innenlaschen 5, zwei die Innenlaschen 5 miteinander verbindenden Hülsen 6 sowie zwei zwischen den Innenlaschen 5 die Hülsen 6 umschließenden Laufrollen 7, wobei die Hülsen 6 und Laufrollen 7 senkrecht zu den Innenlaschen 5 stehen. Die Außenkettenglieder 3 bestehen aus zwei parallel verlaufenden Außenlaschen 8, die mit zwei Gelenkbolzen 9 in den Hülsen 6 der Innenkettenglieder 2 befestigt sind. Das Außenkettenglied 3 ist durch den Gelenkbolzen 9 drehbar an einem Innenkettenglied 2 befestigt und verbindet durch die Außenlaschen 8 das Innenkettenglied 2 mit einem zweiten Innenkettenglied 2, wobei die Außenlaschen 8 parallel zu den Innenlaschen 5 verlaufen. Die Gelenkbolzen 9 des Außenkettenglieds 3 sind in den Hülsen 6 des Innenkettenglieds 2 drehbar gelagert, wodurch diese Verbindungen jeweils ein Kettengelenk 11 der Förderkette 1 bilden. Die Achsen der ineinander verlaufenden Laufrollen 7, Hülsen 6 und Gelenkbolzen 9 fluchten zueinander.

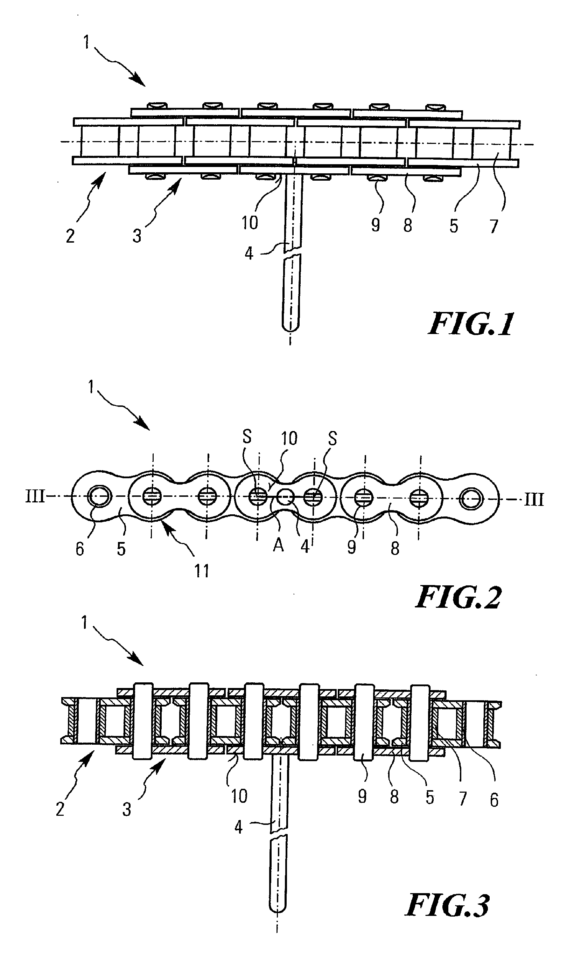

Der Transportstab 4 ist an der Außenlasche 8 befestigt. Dabei steht die Achse des Transportstabs 4 senkrecht auf der Außenfläche 10 derAußenlasche 8, wodurch die Achsen der Gelenkbolzen 9 parallel zur Achse des Transportstabs 4 verlaufen. Der Transportstab 4 weist an seinem freien Ende eine abgerundete Form auf, um die zu transportierenden Behälter vor Beschädigung zu schützen. Wie Fig. 2 zeigt, schneidet die Achse des Transportstabs 4 die zwischen den Schnittpunkten S der Achsen der Gelenkbolzen 9 mit der Außenfläche 10 verlaufenden Abstandsgeraden A. Der Abstand zwischen dem Transportstab 4 und den Schnittpunkten S ist auf beiden Seiten gleich. Der Transportstab 4 ist somit mittig zwischen den zwei Gelenkbolzen 9 auf derAußenlasche 8 angeordnet. Die Innenlaschen 5 und die Außenlaschen 8 weisen eine für Rollenketten typische taillierte Form auf.

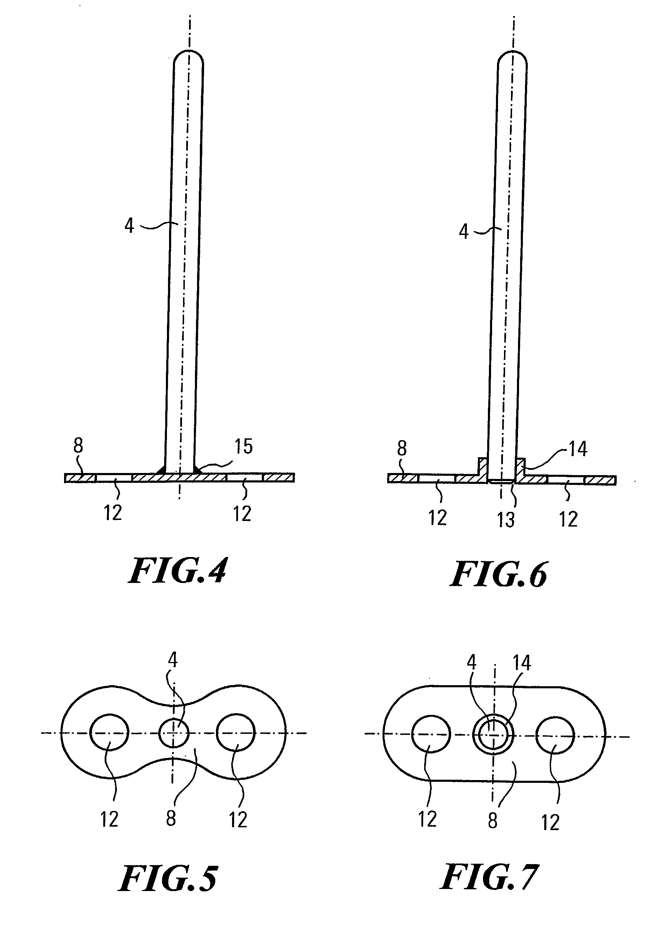

Der in Fig. 4 gezeigte Transportstab 4 ist stumpf mit einer umlaufenden Schweißnaht 15 auf die Außenfläche 10 der Außenlasche 8 aufgeschweißt. Auf der Längsachse derAußenlasche 8 ist in beiden Endbereichen jeweils eine Bohrung 12 zurAufnahme der Gelenkbolzen 9 angeordnet. Der Transportstab 4 ist mittig auf der Längsachse und der Mittelachse derAußenlasche 8 befestigt. Die Außenlasche 8 selbst ist sowohl zur Längsachse als auch zur Mittelachse symmetrisch ausgestaltet.

Die Fig. 6 zeigt einen Schnitt durch eine Außenlasche 8 mit einem eingepressten Transportstab 4. Der Transportstab 4 ist in eine vorgefertigte Öffnung 13 derAußenlasche 8 eingepresst, wobei die Öffnung 13 durch einen Bund 14 verstärkt ist. Da die Öffnung 13 die Stabilität der Außenlasche 8 schwächt, weist die Außenlasche 8 eine gerade Form auf. Wenn das neben der Öffnung 13 verbleibende Material derAußenlasche 8 eine ausreichende Stabilität sichert, können auch leicht taillierte Formen von Außenlaschen 8 eingesetzt werden.

Während der Montage werden auf, in einem vorgelagerten Arbeitsschritt vorbereitete Innenkettenglieder 2, aus zwei Innenlaschen 5, zwei Hülsen 6 und zwei Laufrollen 7, Außenlaschen 8 mit Gelenkbolzen 9 befestigt. In vorbestimmten Abständen werden die Außenlaschen 8 durch mit einem Transportstab 4 versehene Außenlaschen 8 ersetzt. Diese Außenlaschen 8 wurden in einem weiteren vorgelagerten Arbeitsschritt mit dem Transportstab 4 versehen.

Im Betrieb wird die Förderfunktion der Rollenkette durch die auf die Außenlaschen 8 aufgebrachten Transportstäbe 4 nicht beeinträchtigt. Der federnd ausgestaltete, abgerundete Transportstab 4 ermöglicht eine beschädigungsfreie Beförderung der Behälter. Durch die federnde Wirkung des Transportstabs 4 kann die erfindungsgemäße Förderkette 1 auch Störungen des Transportbetriebs unbeschadet überstehen.

## Patentansprüche

1. Förderkette (1), insbesondere Dosen- und Tubentransportkette, mit jeweils über ein Kettengelenk (11) abwechselnd miteinander verbundenen Innenkettengliedern(2), die mindestens zwei Innenlaschen (5) und zwei, die Innenlaschen (5) im parallelen Abstand zueinander verbindende Hülsen (6) aufweisen, und Außenkettengliedern (3), die mindestens zwei Außenlaschen (8) und zwei die Außenlaschen (8) im parallelen Abstand zueinander verbindende Gelenkbolzen (9) aufweisen, sowie mit mindestens einem seitlich überstehenden, federnd ausgestalteten Transportstab (4), wobei sich jeweils ein Gelenkbolzen (9) zum Bilden eines Kettengelenks (11) durch eine Hülse (6) erstreckt,
**dadurch gekennzeichnet, dass** der Transportstab (4) an einer Außenlasche (8) zwischen den Gelenkbolzen (9) befestigt ist.

2. Förderkette (1) nach Anspruch 1,
**dadurch gekennzeichnet, dass** eine dem Innenkettenglied (2) abgewandte Außenfläche (10) der mit dem Transportstab (4) versehenen Außenlasche (8) eine Ebene aufspannt und sich in dieser Ebene eine Abstandsgerade (A) zwischen den Achsen der zwei Gelenkbolzen (9) des Außenkettenglieds (3) erstreckt, wobei die Abstandsgerade (A) eine Längsachse des Transportstabs (4) schneidet.

3. Förderkette (1) nach Anspruch 1,
**dadurch gekennzeichnet, dass** eine dem Innenkettenglied (2) abgewandte Außenfläche (10) der mit dem Transportstab (4) versehenen Außenlasche (8) eine Ebene aufspannt und sich in dieser Ebene eine Abstandsgerade zwischen den Achsen der zwei Gelenkbolzen (9) des Außenkettenglieds (3) erstreckt, wobei ein Abstand zwischen einem Schnittpunkt einer Längsachse des Transportstabs (4) mit der aufgespannten Ebene und der Abstandsgeraden (A) maximal dem Durchmesser des Gelenkbolzens (9) entspricht.

4. Förderkette (1) nach einem der Ansprüche 1 bis 3,
**dadurch gekennzeichnet, dass** der Transportstab (4) von beiden Gelenkbolzen (9) eines Außenkettenglieds (3) gleichweit beabstandet ist.

5. Förderkette (1) nach einem der Ansprüche 1 bis 4,
**dadurch gekennzeichnet, dass** eine dem Innenkettenglied (2) abgewandte Außenfläche (10) der mit dem Transportstab (4) versehenen Außenlasche (8) eine Ebene aufspannt und sich in dieser Ebene eine Abstandsgerade (A) zwischen den Achsen der zwei Gelenkbolzen (9) des Außenkettenglieds (3) erstreckt, wobei sich die Außenlaschen (8) in der aufgespannten Ebene symmetrisch zu beiden Seiten der Abstandsgeraden (A) erstrecken.

6. Förderkette (1) nach einem der Ansprüche 1 bis 5,
**dadurch gekennzeichnet, dass** sämtliche Außenlaschen (8) eine gleiche Größe und eine gleiche Außenkontur in einer durch die dem Innenkettenglied (2) abgewandten Außenfläche (10) derAußenlasche (8) aufgespannten Ebene aufweisen.

7. Förderkette (1) nach einem der Ansprüche 1 bis 6,
**dadurch gekennzeichnet, dass** der Transportstab (4) durch eine Schweißverbindung befestigt ist.

8. Förderkette (1) nach Anspruch 7,
**dadurch gekennzeichnet, dass** die Schweißverbindung eine Punktverschweißung ist.

9. Förderkette (1) nach Anspruch 7 oder 8,
**dadurch gekennzeichnet, dass** der Transportstab (4) auf eine Außenfläche (10) der Außenlasche (8) aufgesetzt ist.

10. Förderkette (1) nach einem der Ansprüche 1 bis 8,
**dadurch gekennzeichnet, dass** ein Ende des Transportstabs (4) in einer Öffnung (13) der Außenlasche (8) angeordnet ist.

11. Förderkette (1) nach Anspruch 10,
**dadurch gekennzeichnet, dass** der Transportstab (4) in der Öffnung (13) der Außenlasche (8) eingepresst ist.

12. Förderkette (1) nach Anspruch 10 oder 11,
**dadurch gekennzeichnet, dass** die Außenlasche (8) zumindestens auf einer Seite einen, die Öffnung (13) umgebenden, umlaufenden Bund (14) aufweist.

13. Förderkette (1) nach Anspruch 12,
**dadurch gekennzeichnet, dass** die Öffnung (13) und der Bund (14) durch Umformen derAußenlasche (8), insbesondere durch einen Stanz-Biegevorgang, ausgebildet sind.

14. Förderkette (1) nach einem der Ansprüche 1 bis 13,
**dadurch gekennzeichnet, dass** der Transportstab (4) aus Federstahldraht hergestellt ist.

15. Förderkette (1) nach Anspruch 14,
**dadurch gekennzeichnet, dass** der Federstahldraht aus einem hochlegierten Chrom-Nickel-Stahl, insbesondere einem X12CrNi17 7, hergestellt ist.

16. Förderkette (1) nach einem der Ansprüche 1 bis 15,
**dadurch gekennzeichnet, dass** ein Mittenabstand zweier Transportstäbe auf der Förderkette (1) einem Vielfachen eines Mittenabstands der Gelenkbolzen (9) eines Außenkettenglieds (3) entspricht.

17. Förderkette (1) nach einem der Ansprüche 1 bis 16,
**dadurch gekennzeichnet, dass** der Transportstab (4) sich parallel zu den Gelenkbolzen (9) erstreckt.

18. Förderkette (1) nach einem der Ansprüche 1 bis 17,
**dadurch gekennzeichnet, dass** ein freies Ende des Transportstabs (4) abgerundet ist.

19. Förderkette (1) nach einem der Ansprüche 1 bis 17,
**dadurch gekennzeichnet, dass** ein freies Ende des Transportstabs (4) mit einer Endkappe versehen ist.
